# EUROPÄISCHE PATENTSCHRIFT

(11) **EP 1 770 466 B1**
(45) Veröffentlichungstag und Bekanntmachung des Hinweises auf die Patenterteilung: **14.07.2010**
(21) Anmeldenummer: 06124272.3
(22) Anmeldetag: 21.08.2003
(51) Int. Cl.: G05B 19/418

(54) **Steuersystem zur Steuerung des Materialflusses in einem Rollenversorgungssystem**
Control system for controlling a supply system which feeds material to a machine
Système de commande pour contrôler l'alimentation d'une machine en matériaux

(30) Priorität: 30.09.2002 DE 10245658
(43) Veröffentlichungstag der Anmeldung: 04.04.2007
(62) Teilanmeldung aus: 03750283.8
(73) Patentinhaber: Koenig & Bauer Aktiengesellschaft, 97080 Würzburg (DE)
(72) Erfinder: Gretsch, Harald, 97246, Eibelstadt (DE)

(56) Entgegenhaltungen:
- EP-A- 0 410 400
- WO-A-97/19758
- DE-A- 3 704 414
- DE-A- 19 803 497

## Beschreibung

Die Erfindung betrifft ein Steuersystem zur Steuerung des Materialflusses in einem Rollenversorgungssystem einer bahnver- und/oder -bearbeitende Maschine, gemäß dem Oberbegriff des Anspruches 1.

Durch die DE 39 10 444 C2 ist eine automatische Anlage zum Einbringen von Papierrollen in die Rollenständer einer Druckmaschine bekannt, wobei die Rollenlogistik von einem dieser Anlage zugeordneten Steuersystem vorgenommen wird.

In der DE 43 39 234 A1 ist ein Verfahren und eine Vorrichtung zum Handhaben von Papierrollen bekannt, wobei Rollen durch ein Steuersystem einer Lagervorrichtung verwaltet und durch ein Transportsystem transportiert werden. Auf Anforderung einer neuen Papierrolle durch den Drucker werden die vom Drucker eingegebenen Daten über Größe und Qualität dem Steuersystem und dem Transportwagen zugeleitet.

Die DE 44 16 213 A1 offenbart eine Anlage zum Lagern und Einbringen von Papierrollen, wobei ein zentraler Steuerrechner der Rollenversorgung Daten zu Papierrollen aus einer Datenerfassung erhält und mit einem Leitstandsrechner und/oder einem übergeordneten Rechner einer Arbeitsvorbereitung in Verbindung steht.

Die DE 43 28 038 A1 zeigt eine Vorrichtung bzw. ein Verfahren zur Materialversorgung mit einem Lager und einem Transportsystem, wobei das Transportsystem von einem Zentralrechner gesteuert ist. Der Zentralrechner steht mit einem Leitstandsrechner und ggf. mit einem zentralen Logistik-Rechner in Verbindung, welcher die Operationen an allen Druckmaschinen der Druckerei steuert und wo eine Bestandsüberwachung der Rollen im Lager erfolgt.

Die DE 199 48 139 A1 zeigt ein reines Steuersystem welches einen Füllstand von Werkstückspeichern bestimmt und zusätzlich ggf. eine Rückmeldung zur Betriebsbereitschaft einzelner Maschinen erhält und berücksichtigt.

In der DE 198 03 497 A1 werden ebenfalls Füllstände, hier von Kunststoffen in Behältern, auf einen vorgegebenen Mindestfüllstand überwacht. In einer Zentralsteuerung sind weiterhin Zuordnungskombinationen gespeichert, welche festlegen, welches Material in welcher Maschine verarbeitet wird. Durch die Zentralsteuerung werden Ventile in entsprechenden Versorgungsleitungen angesteuert.

Die DE 36 30 876 A1 offenbart ein innerhalb eines Produktionsprozesssteuersystems angesiedeltes Papierlager-Steuerteilsystem zur Steuerung des Transports der Rollen vom Magazin zum Druckrollenspeicher und der Steuerung des Transports der Rollen zur Zufuhreinheit jeder Druckmaschine.

Der Erfindung liegt die Aufgabe zugrunde, ein Steuersystem zur Steuerung des Materialflusses in einem Rollenversorgungssystem einer bahnver- und/oder - bearbeitenden Maschine zu schaffen.

Die Aufgabe wird erfindungsgemäß durch die Merkmale des Anspruches 1 gelöst.

Die mit der Erfindung erzielbaren Vorteile bestehen insbesondere darin, dass ein weitgehend fehlerfreies Produzieren möglich ist. Insbesondere Fehler sowie ein Lieferverzug aufgrund von menschlichem Versagen und Fehlentscheidungen sind weitgehend ausgeschlossen. Außerdem können die vorhandenen Rollen - insbesondere auch angefangene Rollen - so ökonomisch wie möglich in der Produktion eingesetzt werden. Des weiteren ist eine Einsparung von Personal zu erzielen.

Durch die Erfindung ist weiterhin der Lagerraum minimierbar und der Bestellvorgang automatisierbar. In Weiterbildung steht das Logistiksystem mit einem Produktplanungssystem in der Weise in Verbindung, dass bereits in einer frühen Phase mögliche Defizite im Lagerbestand erkannt und die Produktion entweder umgestellt oder aber eine schnellstmögliche Lieferung veranlaßt werden kann.

Im Gegensatz zu Lösungen, in welchen beispielsweise Anforderungen oder Bedarfsabschätzungen für Rollen vom Drucker kommen, gewährleistet das Konzept ein Höchstmaß an Zuverlässigkeit, Flexibilität und Effektivität. Die für andere Zwecke - z. B. für die Planung des Produktes oder die Planung der Konfigurierung der Druckmaschine - bereits vorliegenden und in der entsprechenden Datenverarbeitungseinheit vorgehaltenen Daten werden einem ansonsten selbständigen Steuersystem zugänglich gemacht. Dieses ist mit einer eigenen "Intelligenz" ausgeführt und konzeptioniert auf der Basis der erhaltenen Daten die Rollenlogistik. Ein Zugriff des Steuersystems auf aktuell vorliegende Daten aus der Druckmaschine erhöht weiterhin die Sicherheit und Flexibilität.

Ausführungsbeispiele der Erfindung sind in den Zeichnungen dargestellt und werden im Folgenden näher beschrieben.

Es zeigen:
- Fig. 1: eine schematische Darstellung einer Druckerei mit Druckmaschine und Rollenversorgungssystem;
- Fig. 2: eine schematische Darstellung eines möglichen Weges einer Rolle durch das Rollenversorgungssystem;
- Fig. 3: eine prozeßbezogene Darstellung der Rollenversorgung;
- Fig. 4: eine datenflußbezogene Darstellung der Rollenversorgung;
- Fig. 5: ein erstes Ausführungsbeispiel für die physikalische Anbindung des Materialflußsystems;
- Fig. 6: ein zweites Ausführungsbeispiel für die physikalische Anbindung des Materialflußsystems;
- Fig. 7: ein drittes Ausführungsbeispiel für die physikalische Anbindung des Materialflußsystems;
- Fig. 8: ein viertes Ausführungsbeispiel für die physikalische Anbindung des Materialflußsystems;

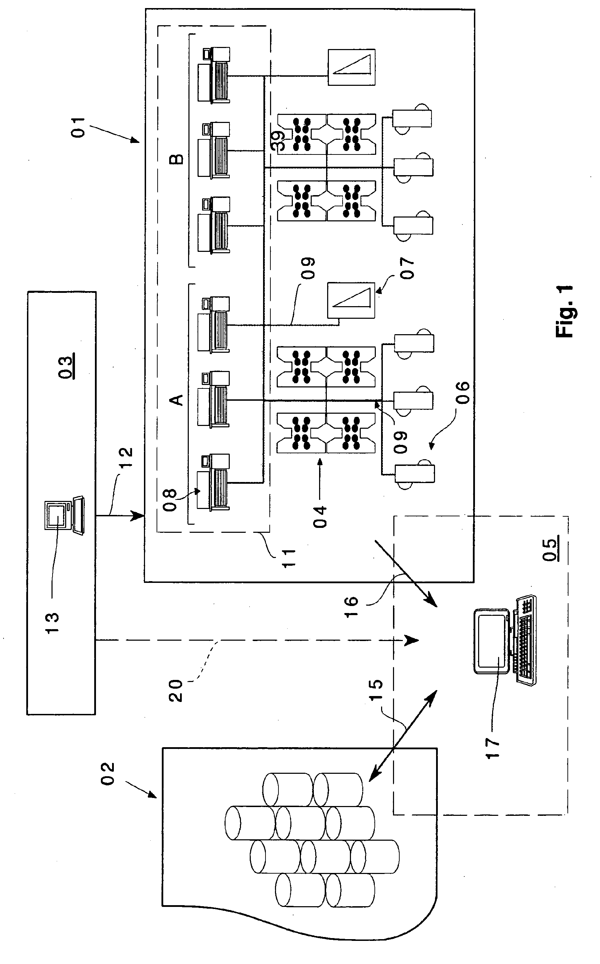

Ein bahnver- und/oder -bearbeitender Betrieb, z. B. eine Druckerei gemäß Fig. 1, weist z. B. zumindest eine bahnver- und/oder -bearbeitende Bearbeitungsmaschine 01, z. B. Druckmaschine 01, ein Materialversorgungssystem 02, z. B. Rollenversorgungssystem 02, sowie ggf. ein Produktplanungssystem 03 auf. Sie verfügt darüber hinaus über ein als Materialflußsystem 05 ausgeführtes Steuersystem 05 zur Koordinierung und Sicherstellung der Versorgung der Produktion mit Rollen.

Die Druckmaschine 01 weist zumindest ein als Druckeinheit 04 und/oder Druckturm 04 ausgeführtes Aggregat 04 zum Bedrucken einer Bahn auf, welche von wenigstens einem als Rollenwechsler 06 ausgeführtem Aggregat 06 (Stillstandsrollenwechsler oder Rollenwechsler für den Rollenwechsel bei voller Maschinengeschwindigkeit) mit Material, z. B. Papier versorgt wird. Weiter kann die Druckmaschine 01 ein der Druckeinheit 04 nachgeordnetes Aggregat 07 zur Bearbeitung der bedruckten Bahn, z. B. mindestens einen Falzapparat 07, beinhalten. Die mindestens eine Druckeinheit 04, der mindestens eine Rollenwechsler 06 und ggf. der mindestens eine Falzapparat 07 sind über mindestens eine Signalleitung 09, z. B. ein druckmaschineninternes Netzwerk 09, mit mindestens einer Bedien- und Recheneinheit 08, z. B. einem Leitstand mit PC, verbunden.

Für eine Produktion werden i. d. R. mehrere (z. B. fünf oder noch mehr) Rollenwechsler 06 auf einen Falzapparat 07 zusammengefahren. Dieser Verbund mit den dazugehörigen Druckeinheiten 04 bzw. Drucktürmen 04 wird als Sektion A; B bezeichnet. Eine Maschinenlinie besteht z. B. aus mehreren Sektionen A; B, auf denen jeweils unterschiedliche Produktionen gefahren werden können.

Im in Fig. 1 dargestellten Beispiel weist die Druckmaschine 01 exemplarisch zwei Sektionen A; B mit jeweils zwei Drucktürmen 04, drei Rollenwechslern 06, drei Bedien- und Recheneinheiten 08 sowie einem Falzapparat 07 je Sektion A; B auf. In der Ausführung nach Fig. 1 sind die Rollenwechsler 06 sowie die Druckeinheiten 04 jeder Sektion über das Netz 09 verbunden. Es besteht über das Netz 09 (homogen oder heterogen) zwischen den Sektionen A; B und/oder den Bedien- und Recheneinheiten 08 eine Verbindung. Auch die Falzapparate 07, wenn vorhanden, stehen mit diesem Netzwerk 09 in Verbindung.

Die Bedien- und Recheneinheiten 08 bilden zusammen mit ihrer Querverbindung sowie ggf. vorhandene aber nicht dargestellte weitere Rechen- und Datenverarbeitungseinheiten eine sog. Leitebene 11 bzw. Maschinenleitebene 11 der Druckmaschine 01. Diese steht z. B. in Signalverbindung 12 mit z. B. mindestens einer Rechen- und/oder Datenverarbeitungseinheit 13 des Produktplanungssystems 03. Über diese Signalverbindung 12 werden zumindest produktionsrelevante Daten vom Produktplanungssystem 03 an die Druckmaschine 01 übermittelt.

Die Druckmaschine 01 steht in geeigneter Weise, z. B. über das Materialflußsystem 05, in Signalverbindung 15; 16 mit dem Rollenversorgungssystem 02. Über zumindest die Signalverbindung 16 zwischen Druckmaschine 01 und Materialflußsystem 05 werden produktionsrelevante Daten von der Druckmaschine 01 an das Materialflußsystem 05 übermittelt, z. B. an mindestens eine Rechen- und/oder Datenverarbeitungseinheit 17. Zusätzlich oder alternativ kann auch ein Transfer über eine optionale Signalverbindung 20 vom Produktplanungssystem 03 erfolgen. Das Materialflußsystem 05 kann prinzipiell auch dem Rollenversorgungssystem 02 oder der Druckmaschine 01 zugeordnet werden oder aber in vorteilhafter Ausführung diesen beiden - im Rahmen seiner Aufgaben - übergeordnet sein.

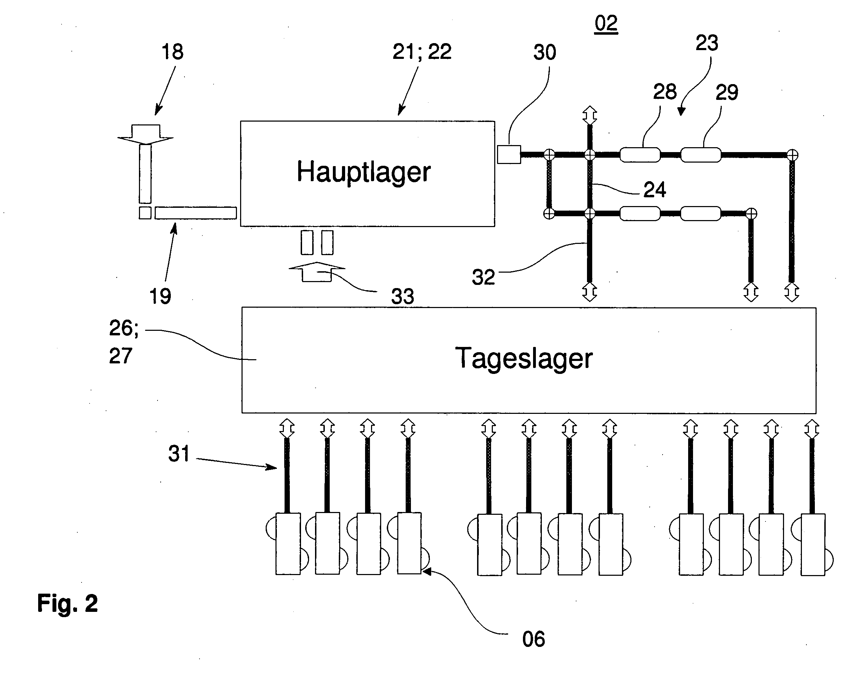

Eine mögliche hardwaretechnische Konfigurierung eines Rollenversorgungssystem 02 ist schematisch in Fig. 2 dargestellt, wobei in einer erfindungsgemäßen Vorrichtung und/oder zur erfindungsgemäßen Verfahrensweise jedoch nicht sämtliche nachfolgend beschriebenen Subsysteme vorhanden sein müssen sowie die einzelnen funktionellen Subsysteme in anderer Weise als dargelegt ausgeführt sein können.

Im Ausführungsbeispiel nach Fig. 2 weist das Rollenversorgungssystem 02 als Subsysteme 18; 19; 21; 22; 23; 24; 26; 27; 28; 29; 30 einen Wareneingang 18, ein erstes Transportsystem 19, ein erstes Lager 21 (ggf. mit einem eigenen Transportsystem 22 wie Regalbediengerät, Kran oder Automatic Guided Vehicle (AGV)), z. B. Hauptlager 21, einen Vorbereitungskreis 23 mit mindestens einem Transportsystem 24, ein zweites Lager 26, z. B. Tages- oder Produktionslager 26 (ggf. mit Transportsystem 27 wie Regalbediengerät, Kran oder AGV), sowie ein Transportsystem 31 zwischen dem Tageslager 26 und den Rollenwechslern 06 der Druckmaschine 01 auf. Zusätzlich kann auch eine sog. Kippstation 30 zum Kippen von stehend angelieferten und/oder gelagerten Rollen in die für die Produktion erforderliche liegende Lage vorgesehen sein Das letztgenannte Transportsystem 31 des Rollenversorgungssystems 02 ist z. B. als ein der Druckmaschine 01 bzw. dem Rollenwechsler 06 zuzuordnender innerer Beschickungskreis 31 ausgebildet. Der Vorbereitungskreis 23 weist z. B. mindestens eine Auspackstation 28 sowie eine Klebevorbereitung 29 aus. Optional können Transportwege 32; 33 für den Rücktransport von Leerrollen bzw. deren Hülsen und/oder von Paletten vorgesehen sein.

Das Rollenversorgungssystem 02 kann jedoch als Minimalforderung auch lediglich eines der Lager 21; 26 mit Transportsystem 22; 27 und das Transportsystem 31 zwischen dem Lager 21; 26 und den Rollenwechslern 06 der Druckmaschine 01 aufweisen.

Im einfachsten Fall besteht der Wareneingang 18 aus einer Übergabeposition an die automatische Rollenversorgung und einer Eingabemöglichkeit für die Rollen-EingangsInformation. Optional ist es jedoch von Vorteil, die Entladung von LKW, Bahn oder Schiff nicht mit dem Stapler vorzunehmen sondern zu automatisieren. Hier können drei grundlegend verschieden Modelle unterschieden werden: a) liegender Transport der Papierrollen und rollen der Rollen über den Umfang; b) stehender Transport der rollen auf einem LKW/Bahnwagon/Schiff mit Bodenschienen; c) stehender Transport der Papierrollen auf speziellen LKW/ Bahnwaggon/Schiff, die eine Art Förderband auf der Ladefläche aufweisen.

Dem Wareneingang 18 kann eine Rollenvereinzelung zugeordnet sein. Insbesondere halb- und viertelbreite Rollen werden i.d.R. stehend übereinander transportiert. In diesem Fall ist es erforderlich, die Rollen zu vereinzeln, d.h. die obere Rolle abzuheben und neben die untere zu stellen etc.

In einem automatischen System kann es zu einer Havarie kommen, wenn die zu Transportierenden Güter nicht der erwarteten Form entsprechen. Deshalb ist es zweckmäßig, die Einhaltung der äußeren Form innerhalb gewisser Toleranzen zu überprüfen und dem Wareneingang 18 zusätzlich eine Konturkontrolle zuzuordnen. Bei Papierrollen bieten sich hierfür Systeme über Lichtschranken, Lichtgitter oder Flächenscanner an, an die eine mehr oder weniger intelligente Auswertung angeschlossen ist.

Weiterhin ist es von Vorteil, wenn im Bereich des Wareneingangs 18 die angelieferte Rolle beispielsweise über eine Barcodeerfassung oder ein anderes System identifiziert wird. Der Barcodelabel dient zur Identifikation der Rolle und wird vom System erfaßt.

Das Hauptlager 21 ist z. B. zur stehenden Lagerung von verpackten Papierrollen in mehrfachtiefen Lagerschächten in mehreren Blöcken und Ebenen als Hochregallager 21 ausgeführt. Das Hochregallager 21 kann auch in der Lage sein Paletten aufzunehmen. Es soll ausreichen Kapazität haben, um den erforderlichen Papiervorrat für bis zu 8 Wochen Produktion aufnehmen zu können. Sind die Rollen im Hauptlager 21 z. B. stehend gelagert, so schließt sich z. B. dem Hauptlager 21 die Kippstation 30 an, bevor die Rolle in den Vorbereitungskreis 23 gelangt.

Ein Vorbereitungskreis 23 besteht in der Regel aus einer Auspackstation 28 und einer als Klebevorbereitungsautomat ausgeführten Klebevorbereitung 29. Hinzu kommen noch Übergabepositionen für das jeweilige Transportsystem 24. Die Auspackstation 28 weist z. B. ein Mittel auf, auf welchem die Papierrollen ausgerichtet und teilautomatisch ausgepackt werden können. Außerdem kann hier der Barcode, z. B. mittels Handscanner, zur Überprüfung erfaßt, der Durchmesser ermittelt und die Rolle zur Kontrolle gewogen werden. Die Klebevorbereitung 29 stellt beispielsweise ein automatisches Klebevorbereitungssystem dar. Eine geeignete Klebevorbereitung 29 kann z. B. ca. 15 Rollen in der Stunde vorbereiten.

Das Tageslager 26 dient zur Aufnahme von Papierrollen, die für die Produktion vorbereitet wurden bzw. von den Rollenwechslern 06 zurückgeliefert wurden. Zu beachten ist, daß die Klebevorbereitung nur beschränkte Zeit, derzeit z. B. 8-12 Stunden, haltbar ist und dann erneuert werden muß. Im Tageslager 26 müssen ggf. auch Restrollen auf Ladehilfen, die von einem Rollenwechsler 06 zurückgeliefert wurden, sowie Ladehilfen gehandhabt werden.

Ein Rollenwechsler 06 hat z. B. zwei Tragarmpaare, zur Aufnahme von Papierrollen. Jedem Rollenwechsler 06 ist ein Stück Förderstrecke zugeordnet, auf der eine Papierrolle für den Rollenwechsler 06 vorgelegt werden kann. Der Rollenwechsler 06 mit seiner Pufferposition (Vorlegeplatz) wird auch als innerer Beschickungskreis 31 bezeichnet und ist Teil der Druckmaschine 01 bzw. dieser zugeordnet. Er dient zum abrollen der Papierrollen und zum automatischen Rollenwechsel mit Klebung.

Für den Transport der Papierrollen gibt es innerhalb der Anlage wie oben bereits ausgeführt in der Regel mehrere unterschiedliche Transportsysteme 19; 22; 24; 27; 31. Wenn die Rolle in einem oder mehreren Lagerbereichen stehend gelagert wird oder die Rollen stehend angeliefert werden, kann noch eine nicht dargestellte Kippstation erforderlich sein. Für den Transport über längere horizontale Strecken, wie z. B. zwischen Wareneingang 18 und Lager 21, werden z. B. Platten- oder Gurt- oder Plattenförderer eingesetzt, die ähnlich einem Förderband funktionieren. In einem z. B. als Hochregallager 21 ausgeführten Lager 21 werden z. B. Regalbediengeräte 22 als Transportsysteme 22 eingesetzt. Für als Regallager 21; 26 ausgeführte Lager 21; 26 bis zu drei Ebenen und für Streckentransporte können z. B. auch als fahrerlose Flurförderzeuge 19; 22; 24; 27 ausgeführte Transportsysteme 19; 22; 24; 27 eingesetzt werden. Für den Rollentransport innerhalb der Vorbereitungskreise 23 und in den inneren Beschickungskreisen 31 werden z. B. schienengebundene Transportsysteme 23; 31, z. B. getriebene schienengebundene Transportwagen mit entsprechenden Führungen, eingesetzt. In kleineren bis mittleren Anlagen kann auch der gesamte Rollentransport mittels schienengebundener Transportwagen realisiert werden.

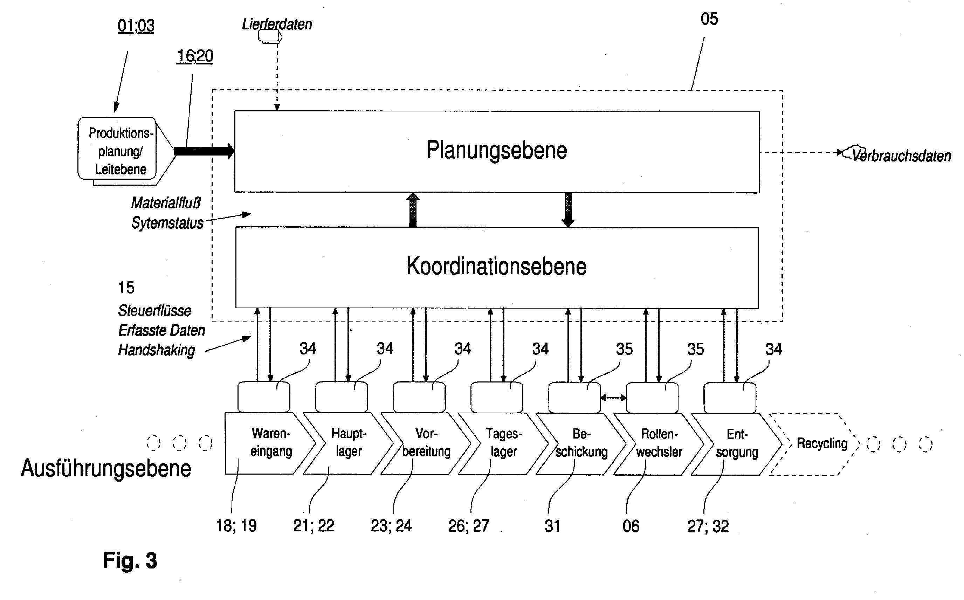

Die Bewegungssteuerung der Transportsysteme 19; 22; 24; 27; 31 geschieht jeweils durch eine diesem Transportsystem 19; 22; 24; 27 zugeordnete Steuerung 34; 35, z. B. eine speicherprogrammierbare Steuerung 34; 35, insbesondere eine Konfigurator-SPS (inklusive Bedienpanel, mit welchem Fahraufträge konfigurierbar sind), oder in vorteilhafter Ausführung eine diesem Transportsystem 19; 22; 24; 27; 31 zugeordnete Recheneinheit 34; 35, z. B. einen Fahrzeugleitrechner 34; 35 (siehe hierzu Fig. 3). Die Steuerung 35 des inneren Beschickungskreises 31 und/oder Rollenwechslers 06 stellt z. T. eine Schnittstelle zwischen Rollenversorgungssystem 02 und Druckmaschine 01 dar, und kann dann je nach Betrachtung und Ausführung dem einen oder anderen System zugeordnet werden.

In einer Hochleistungs-Druckmaschine mit z. B. Zylindern doppelten Umfangs, d. h. einem Umfang von 900 bis 1300 mm, welcher je nach Format zwei Abschnittslängen (z. B. Höhen einer Zeitungsseite) entspricht, werden beispielsweise ca. 90.000 Exemplare bei Doppelt- und ca. 45.000 Exemplare bei Sammelproduktion produziert. Wenn auf einer Rolle ca. 18.000 m Papier aufgerollt sind, wird eine Rolle beispielsweise in ca. 15-20 Minuten verbraucht. Für Rollenwechsel, Beschleunigung, Klebung und Hülsenauswurf sind ca. 4 bis 7 min einzuplanen.

Das Rollenversorgungssystem 02 muß in der Lage sein, eine Druckmaschine 01 mit einer oder mehreren Maschinenlinien, die jeweils aus mehreren Sektionen A; B bestehen können, ausreichen mit vorbereiteten Papierrollen zu versorgen. So kann beispielsweise ein Bedarf von ca. 60 Rollen in der Stunde während der Produktionszeiten (i.d.R. Nachts) vorliegen. Die Befüllung des Tageslagers 26 und die Rollenvorbereitung kann z. B. in produktionsschwachen Zeiten (z. B. am Tag) erfolgen.

Weiter muß das Rollenversorgungssystem 02 in der Lage sein, Rollenanforderungen und Rücklieferaufträge von Rollenwechslern 06 abzuarbeiten. Wünschenswert ist es auch, anhand vom Produktplanungssystem 03 mitgeteilter Produktionsdaten den aktuellen Papierbedarf, z. B. auch auf der Basis von aktuell von der Maschinenleitebene 11 aktuellen mitgeteilten Maschinenparameter, zu ermitteln. Weiterhin sollen auch sich während der laufenden Produktion ändernde "Soll"-Produktionsdaten Berücksichtigung finden.

Um den genannten Anforderungen zu genügen weist die Druckerei das Materialflußsystem 05 zur Planung, Koordination und Steuerung des Materialflusses in der Druckerei auf. Das Materialflußsystem 05 steuert und verwaltet in vorteilhafter Ausführung den gesamten Materialfluß in der Anlage und ist den Subsystemen des Rollenversorgungssystems 02 überlagert. Es beinhaltet z. B. neben der direkten Rollenversorgung die Handhabung des Wareneingangs 18 und die Verwaltung des Lagers 21; 26. Ist das Lager 21; 26 mit einem eigenen Lagerverwaltungssystem als Subsystem ausgeführt, so weist das Materialflußsystem 05 zumindest eine Schnittstelle zu diesem Subsystem auf.

Das Materialflußsystem 05 ist in Fig. 3 strichliert dargestellt. Die Informationen über geplante und laufende Produktionen bekommt das Materialflußsystem 05 beispielsweise über die Signalverbindung 16 vom übergeordneten Produktplanungssystem 03 bzw. von der Druckmaschine 01, insbesondere deren Leitebene 11. Diese Daten werden im Materialflußsystem 05 in unten näher erläuterter Weise verarbeitet. Für den Materialtransport, die Rollenvorbereitung und die Maschinenversorgung stehen dem Materialflußsystem 05 u. a. die genannten, unterlagerten Subsysteme des Rollenversorgungssystems 02 bzw. der Druckmaschine 01 zur Verfügung, die jeweils eng umgrenzte Funktionen ausführen. Hierzu steht das Materialflußsystem 05 mit den für den Materialfluß benötigten Subsystemen in Signalverbindung 15. Dies können im einfachsten Fall des Rollenversorgungssystems 02 lediglich eines der Lager 21; 26 (ggf. mit Transportsystem 22; 27) und das Transportsystem 31 vom Lager 21; 26 zum Rollenwechsler 06 sein. In Fig. 3 ist das Materialflußsystem 05 jedoch als Prozeßkette zusammen mit allen o. g. Subsystemen dargestellt.

In prozeßbezogener Sichtweise werden für das Materialflußsystem 05 selbst zwei Prozeßebenen 38; 39, nämlich eine Planungsebene 38 und eine Koordinationsebene 39, unterschieden, welche mit einer durch die Subsysteme gebildeten dritten Prozeßebene 41, der Ausführungsebene 41, zusammenwirken.

Die Planungsebene 38 ist dabei für die Verbrauchsberechnung, Einlager- und Versorgungsstrategie, bezogen auf die geplanten Produktionen, für die Funktionsüberwachung und die Lager- und Bestandsverwaltung zuständig. Sie hat Schnittstellen zur Koordinationsebene 39 und ggf. zu systemfremden Datenquellen (wie z B. zum Erhalt elektronischer Lieferdaten bzw. Lieferscheinen von Lieferanten) und Datensenken (wie z. B. die Abgabe von Verbrauchsdaten an eine Datenbank). Die Planungsebene 38 kann mit ihrer Arbeit beginnen, bevor die Koordinationsebene 39 bzw. die Subsysteme der Ausführungsebene 41 betriebsbereit sind oder noch andere Aufträge ausführen. Es kann vorkommen, daß immer wiederkehrende Produktionen (z. B. eine bestimmte Zeitung oder Zeitschrift) bereits Wochen und Monate im Voraus geplant werden. Da in der Planungsebene 38 Daten zum Bestand vorliegen, wird dort bei gegebenem Anlaß entschieden, ob und welche Ersatzrolle anstelle einer fehlenden geforderten Rolle eingesetzt werden soll.

Die Koordinationsebene 39 ist verantwortlich für die Ablaufsteuerung, Transportsteuerung, Bewegungssteuerung, Sicherheitsüberwachung und Lagerplatzverwaltung. Hier werden Strategien umgesetzt, um die Ressourcen für den Transport und die Zykluszeiten zu optimieren. Die Koordinationsebene 39 erhält von der Planungsebene 38 wo und in welchem Zeitfenster welches Papier bzw. welche Rolle benötigt wird und koordiniert die unterlagerten Subsysteme der Ausführungsebene 41, um die Versorgung der Produktion unter den genannten Rahmenbedingungen sicher zu stellen. Das Zeitfenster, auf welches sich die Arbeit der Koordinationsebene 39 bezieht, umfaßt in der Regel eine Nacht oder einen Produktionstag. In einigen Fällen kann sich dieses Zeitfenster jedoch bis auf eine Woche ausdehnen.

Die Ausführungsebene 41 als dritte Prozeßebene 41 besteht aus einer Reihe der oben genannten autarken Subsysteme, die jeweils eng abgegrenzte Funktionen. Diese Subsysteme bestehen in der Regel jeweils aus einer Mechanik und der Steuerung 34; 35, zu der die Koordinationsebene 39 eine Schnittstelle hat. In den meisten Fällen kommunizieren die Subsysteme der Ausführungsebene 41 nicht direkt miteinander, sondern über die Koordinationsebene 39. In der Ausführungsebene 41 sieht jedes Subsystem immer nur seinen aktuellen Auftrag. Wenn dieser abgearbeitet ist, kann der nächste Auftrag von der Koordinationsebene 39 übergeben werden. Diese Aufträge können, in Abhängigkeit vom Subsystem, unterschiedliche Komplexität haben. Ausnahmen von der ausschließlichen Schnittstelle zur Koordinationsebene 39 gibt es z. B. nur bei Hardwarekontakten für die Sicherheit oder den Backup-Betrieb sowie im inneren Beschickungskreis 31, der beispielsweise als vom Transportsystems 27 ausgehender Stichkanal mit Wagen ausgeführt ist und mit einer nicht dargestellten Schiebebühne und den Tragarmen des Rollenwechslers 06 zusammenwirkt. Bei letztgenannten Subsystemen gehen automatische Bewegungen ineinander über, wobei die Funktion zur Versorgung der Druckmaschine 01 auch gewährleistet sein muß, wenn die überlagerten Systeme, wie z. B. das Materialflußsystem 05 oder ein Teil davon, ausgefallen sind. So muß der Rollenwechsler 06 z. B. sowohl mit der Steuerung der Druckmaschine 01 als auch mit dem Rollenversorgungssystem 02 in Wirkverbindung stehen.

Da die unterschiedlichen Prozeßebenen 38; 39; 41 weitgehend unabhängig voneinander arbeiten können (teilautonom), ist es von Vorteil, einen notwendigen Datenaustausch auf derjenigen Prozeßebene 38; 39; 41 zu realisieren, wo die Daten auch benötigt werden. Insbesondere für die Ausfallsicherheit und die Verfügbarkeit der Gesamtanlage ist es wichtig, daß Informationen dort gehandhabt werden, wo sie auch verarbeitet werden. Daneben ist es auch von besonderem Vorteil, dass über die Verbindungen zwischen den einzelnen Prozeßebenen 38; 39; 41 kein überflüssiger Datenverkehr stattfindet, welcher beispielsweise den Regel- bzw. Steuervorgang des einzelnen Subsystems selbst betrifft. Jedes System bzw. Subsystem erhält seine Anweisung, arbeitet diese ab und gibt entsprechend dem (Zwischen-)Ergebnis seine Meldungen zurück.

Die Planungs- und Koordinationsebene 38; 39 können als getrennte Prozesse auf einer gemeinsamen Rechen- und/oder Datenverarbeitungseinheit 17, z. B. einem Server 17, oder auf zwei miteinander verbundenen Servern 17 ausgeführt werden. Die Subsysteme der Ausführungsebene 41 sind jedoch jeweils für sich ausgeführt und können wie auch die Systeme der Druckmaschine 01 in verschiedener Ausführung von unterschiedlichen Lieferanten beigestellt sein.

In vorteilhafter Ausführung sind für die Kommunikation zwischen Druckmaschine 01 bzw. Leitebene 11 und/oder Produktplanungssystem 03 mit dem Materialflußsystem 05 und insbesondere zwischen dem Materialflußsystem 05 und den zugeordneten Subsystemen Rahmenbedingungen für die auszutauschenden Daten festgelegt.

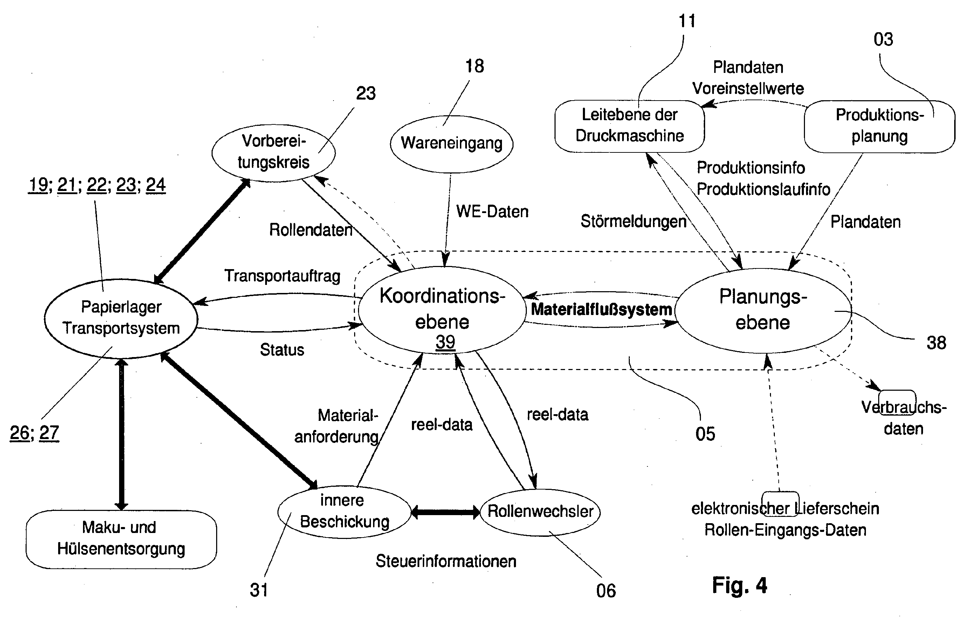

In Fig. 4 sind funktionalen Einheiten sowie die Datenflüsse dargestellt, die für eine automatische Rollenversorgung notwendig sind. Darstellungstechnisch wurden als funktionale Einheit zwar beispielsweise das bzw. die Rollenlager 21; 26 sowie die Transportsysteme 19; 22; 24; 27 zusammengefaßt, wobei diese jedoch wie oben beschrieben im wesentlichen einzeln für sich als funktionale Einheiten mit der Koordinationsebene 39 kommunizieren. Obgleich auch der Auftrag (falls vorhanden) und die Rückmeldung der Vorbereitungskreis 23 (falls vorhanden) ebenfalls über diesen Weg erfolgen kann, ist die Vorbereitung 23 nochmals explizit als funktionelle Einheit ausgewiesen, von welcher die Koordinationsebene 39 beispielsweise Rollendaten empfängt. Ebenso verhält es sich mit dem Wareneingang 18 (falls vorhanden) bzgl. Wareneingangsdaten sowie mit der inneren Beschickung 31 im Hinblick auf eine Materialanforderung. Der Rollenwechsler 06 tauscht als weitere funktionelle Einheit mit der Koordinationsebene 39 z. B. Daten im Hinblick auf die aktuelle, auf anzufordernde oder auf rückzunehmende Rollen aus und ist datentechnisch zusätzlich (wie oben bereits dargelegt) mit dem inneren Beschickungskreis 31 verbunden.

Nicht alle der dargestellten Datenflüsse sind für die grundlegende Funktionalitäten des Rollenversorgungssystems 02 bzw. des Materialflußsystems 05 zwingend notwendig. Die Bestrebungen gehen jedoch dahin, die Papierversorgung insgesamt zu automatisieren und in einen rechnergestützten Workflow einzubinden.

Die wichtigsten Datenquellen und Datensenken sind die Leitebene 11, von der die aktuellen Produktionsdaten, wie Maschinendrehzahl, Soll-Auflage, Ist-Auflage usw. bezogen werden, das Produktplanungssystem 03, von dem das Produktschema, die Papiersorte, die Rollenbreiten, die beteiligten Rollenträger und der geplante Produktionstermin geliefert werden sowie die Rollenwechsler 06 bzw. Schiebebühnen des internen Beschickungskreises 31, über die die Papierversorgung der Produktion realisiert wird.

Die Datenflüsse zeigen hierbei lediglich den logischen Weg der Daten. Steuerflüsse und das physikalische Übertragungsmedium sind aus dieser Darstellung nicht entnehmbar. Datenflüsse, die für den Materialfluß hier ohne Bedeutung sind (z. B. zwischen dem Rollenwechsler 06 und der Maschinenleitebene 11) sind nicht dargestellt. Da es hier um die Daten-Schnittstellen des Materialflußsystems 05 nach "außen" geht, sind auch die internen Datenflüsse zwischen Planungsebene 38 und Koordinationsebene 39 nicht näher betrachtet.

Wie bereits bei der Prozeßkette aus Fig. 3 läuft die Kommunikation mit externen Systemen (Maschinenleitebene 11, Produktplanungssystem 03, Exportieren von Verbrauchsdaten, Importieren von Liefer- bzw. Rolleneingangsdaten) somit über die Planungsebene 38, wohingegen der Datenaustausch mit den untergeordneten Subsystemen über die Koordinationsebene 39 abgewickelt wird.

Im folgenden werden nun die wesentlichen, zu übergebenden Daten für die genannten Daten-Schnittstellen definiert:

Für den Fall, dass das Gesamtsystem über einen Wareneingang 18 mit entsprechender Ausrüstung verfügt, erfolgt vom Wareneingang 18 die Information über den Rolleneingang einer Rolle mit zumindest standardisierten Angaben über Geometrie der Rolle sowie Qualität des Papiers. Diese Angaben des Herstellers sind vorzugsweise in einem der Rolle zugeordneten Barcode, z. B. Ifra-, Cepi- oder Tappi-Code, enthalten.

Bei Verwendung des Ifra-Codes werden z. B. Daten zur Rollen-Nummer (Papiermaschinennummer und Herstellungswoche sowie die Rollen-ID oder die Tambour-ID mit entsprechendem Tambour-Satz und der Position im Tambour), das Brutto-Rollengewicht, Verpackungsart, Hersteller, Papiertyp (Flächengewicht & Qualität als Code) sowie Herstellercode übermittelt. Bei Verwendung des Tappi-Codes werden z. B. Herstellercode, Produktionsstätte, Papiermaschine, Herstellungsjahr, Herstellungsmonat, Herstellungstag, Tambour des Tages, radiale Lage des Papiers am Tambour sowie die horizontale Lage des Papiers am Tambour übermittelt.

Zusätzlich zu den vom Hersteller über den Barcode gelieferten Daten können im Bereich des Wareneingangs ermittelte Parameter wie "Rollenbreite" sowie "Rollenzustand" (Beschädigungsart und -tiefe) übermittelt werden.

Für den Fall, dass die Anlage entweder nicht über einen derart ausgestatteten Wareneingang 18 verfügt, oder aber zusätzlich zu den aus dem Wareneingang 18 erhaltenen Daten, können die o. g. Daten des Barcodes auch im Vorbereitungskreis 23 ausgelesen und dem Materialverwaltungssystem 05 zugeleitet werden. Zusätzlich werden hier z. B. Daten zum Brutto-Rollengewicht, zum Rollengewicht mit Weismakulatur, zum Netto-Rollengewicht, zur Rollenbreite sowie zum Rollendurchmesser ermittelt und dem Materialverwaltungssystem 05 zugeleitet.

Zwischen Rollenwechsler 06 und dem Materialflußsystem 05 werden wichtige Daten über die Rolle, wie z. B. insbesondere deren Länge (bzw. Restlänge bei Rückgabe) und Bahnbreite sowie der Papiertyp oder äquivalente Informationen enthaltende Rollen-ID oder Barcodeinformation und Statusinformationen übergeben. Zusätzlich vorteilhafte Parameter sind z. B. Wickelrichtung, Durchmesser, Gewicht und Flächengewicht. Weitere lieferantenspezifische Daten wie z. B. die Angaben zur Geometrie, zum Gewicht, Lieferantenerkennung, IFRA-Code, Materialnummer und Chargennummer ausgetauscht werden. Die aus einigen oder allen der genannten Informationen zusammen gesetzten Daten werden hier und in Fig. 4 kurz als "reel-data" zusammen gefaßt.

Vom Produktplanungssystem 03 erhält das Materialflußsystem 05 die für die Planung im Materialfluß erforderlichen Plandaten für anstehende (und ggf. laufende) Produktionen. Dies beinhaltet neben einer Produktionskennung, z. B. einer Produktions-ID, die zur Ermittlung des Bedarfs, der Zeitfenster und der Verbrauchsorte wesentlichen Informationen wie z. B. die geplante Auflage, die geplante Sektion, die geplante Andruckzeit, die geplante Ausdruckzeit sowie die geplante Produktionsart. Dazu kommen vorteilhaft Angaben zur Anzahl der geplante Bahnen mit entsprechender Information über das Papier (Breite, zugeordneter Rollenwechsler) sowie die insgesamte Seitenzahl. Produktname, geplanter Erscheinungstag sowie Name der Ausgabe können zusätzlich übermittelt werden.

Steht keine direkte Schnittstelle zwischen Produktplanungssystem 03 und Materialflußsystem 05 zur Verfügung, so können die genannten Daten auch vom Produktplanungssystem 03 über die Leitebene 11 der Druckmaschine an das Materialflußsystem 05 gegeben werden.

Von der Leitebene 11 erhält das Materialflußsystem 05 Daten zur Produktion selbst, zum aktuellen Status der laufenden Produktion sowie zu Geometrie und Typ des Papiers sowie deren Bezug zu den Rollenwechslern. Zusätzlich kann Information zum Produkt selbst, wie z. B. Produktions-ID, Produktname, Erscheinungstag, Name der Ausgabe und Auflage übermittelt werden.

Die Daten zur Produktion können Sektionsbezeichnung, Produktionsart, Andruckzeit, Ausdruckzeit und Produktionsstatus sein. Der aktuellen Status beinhaltet z. B. Angaben zur Soll-Auflage, Anzahl der gedruckten Produkte, Anzahl der verkaufsfähigen Produkte, Status der Druckmaschine, Produktionsgeschwindigkeit sowie Zeitstempel.

Den Typ des Papiers betreffende Angaben sind z. B. ein Papierbezeichner, das Flächengewicht und ggf. die Papierdicke. Der Bezug zwischen Papier und den Rollenwechslern 06 beinhaltet beispielsweise die Angabe des Rollenwechslers 06, die Zuordnung des Papiers (z. B. eine Papier-ID) und Angaben über die Breite.

Das Materialflußsystem 05 kann der Leitebene 11 Störmeldungen, z. B. Informationen über ausgefallene Anlagenteile und Angaben zur Fehlerlokalisierung übermitteln.

Wie oben dargelegt, kommuniziert das Materialflußsystem 05 im Bereich seiner Koordinationsebene 39 mit den Transportsystemen 19; 22; 24; 27; 31 bzw. Lagern 21; 26. Diese Kommunikation verläuft für die einzelnen genannten Subsysteme in ähnlicher Weise und wird hier gemeinsam abgehandelt. Das Materialflußsystem 05 spricht direkt das betreffende Transportsystem 19; 22; 24; 27; 31 bzw. Lagern 21; 26 an und übermittelt einen Hol- oder Bringauftrag. Da das Materialflußsystem 05, insbesondere im Bereich seiner Koordinationsebene 39, in vorteilhafter Ausführung auch die Lagerplatzverwaltung beinhaltet, werden Angaben zum Startpunkt und Zielpunkt an das betreffende Transportsystem 22; 27 übermittelt. Das Lager 21; 26 und/oder das Transportsystem 22; 27 verfügen in vorteilhafter Ausführung zwar nicht über eine Lagerplatzverwaltung, aber über eine Platzüberwachung, d. h. eine Überwachung darüber ob der und ggf. welcher Platz frei oder belegt ist. Ist die Lagerplatzverwaltung als eigenes Subsystem zwischen Lager 21; 26 und Materialflußsystem 05 ausgeführt, so ist die Ausgabe eines Unterauftrages an dieses erforderlich, was jedoch einen erhöhten Aufwand an Kommunikation erfordern würde.

Die angesprochenen Transportsysteme 19; 22; 24; 27; 31 bzw. Lager 21; 26 melden jeweils - entweder in festen Zyklen, oder aber spätestens jeweils nach Beendigen oder Fehlschlagen des Auftrages - durch einen entsprechenden Datensatz ihren Status an das Materialflußsystem 05 zurück.

Zur Vollständigkeit wird auch der Transfer vom Produktplanungssystem 03 zur Leitebene 11 genannt. Er enthält neben den bereits im Rahmen der Übermittlung vom Produktplanungssystem 03 zum Materialflußsystem 05 erwähnten Plandaten alle für die Konfigurierung und die Voreinstellung wesentlichen Daten, wie z. B. Farbvoreinstellung, Bahnspannungsvoreinstellung, Sektionen, Druckstellen, Belegung etc.

In nachfolgender Tabelle sind die unbedingt zu übergebenden Daten für die jeweiligen Daten-Schnittstellen zusammen gefaßt:

| | |
|---|---|
| Wareneingang 18 → MVS 05 | - Rollen-ID |
| | - Rollenbreite |
| | - Daten aus Ifra-Code, besonders Gramatur |
| Vorbereitungskreis 23 → MVS | - Rollen-ID |
| | - Nettogewicht |
| Rollenwechsler (RW) 06 → MVS (transportrelevante und/oder den Status des Rollenwechslers betreffende Daten) | - Status der RW - Position |
| | - Rollen-ID |
| | - aktueller Durchmesser der aktiven Rolle |
| | - Rollenanforderung |
| MVS → Rollenwechsler (RW) 06 | - Rollen-ID |
| | |
| Produktplanungssystem 03 → MVS (produktionsrelevante Daten, Plandaten) | - eingeplante Rollenwechser 06 |
| | - Plan- bzw. Soll-Auflage |
| | - Umfang des Produktes (Seitenzahl) |
| | - geplante Papiersorte |
| Leitebene 11 → MVS (produktionsrelevante Daten, den aktuellen Status betreffende Daten) | - Produktionsgeschwindigkeit |
| | - Ist-Auflage Netto, Ist-Auflage Brutto |
| | - Soll-Auflage |
| Transportsystem/Lager → MVS | - Status Transportsystem/Lager |
| | - Rollen-ID |
| MVS →Subsystem (Transportsystem/Lager) | - Auftrag bzw. Transportauftrag |

Ein wichtiger Aspekt der genannten Prozesse und Datenflüsse ist es somit, dass ein produktbezogener, das geplante oder laufende Produkt charakterisierender Datensatz, welcher in der Rechen- und/oder Speichereinheit 13 bzw. in der Leitebene 11 abgelegt ist, über die feste Signalverbindung 16; 20 etc. dem Materialflußsystem 05 zur weiteren Verarbeitung zugeleitet wird. Es muß weder eine Verbrauchsprognose manuell vom Drucker vorgenommen werden, noch erfolgt diese im Bereich des Produktplanungssystems 03. Im Gegensatz hierzu greift das Materialflußsystem 05 zur Entwicklung und/oder Änderung seiner Entscheidungen und Strategie immer auf aktuelle vorliegende Daten zu. Die Übertragung sämtlicher vorgenannten Aufgaben an das in Bezug auf die Rollenversorgung übergeordnet arbeitende Materialflußsystem 05 und der Zugriff auf die Daten aus Produktplanungssystem und/oder Druckmaschine 01 gewährleistet ein Höchstmaß an Flexibilität und Sicherheit. Das Materialflußsystem 05 ist zu jeder Zeit auf dem aktuellen Stand, was die Produktionserfordernisse, den Bestand sowie den Status der ihr untergeordneten Subsysteme und die Schnittstelle zum Rollenwechsler 06 betrifft.

Mit der vorbeschriebenen Konfigurierung des Rollenversorgungssystems 02 und dem entsprechenden Datenaustausch sind beispielsweise folgende Vorgänge abzuarbeiten:
- Entladung eines LWK mit Wareneingangskontrolle und Einlagerung ins Hauptlager 21
- Umlagerungen im Hauptlager 21
- Auslagerung vom Hochregallager 21 zu einer Kippstation 30 und Kippen einer Papierrolle
- Transportieren einer Papierrollen zu einem Auspackstation 28
- Durchschleusen einer Papierrolle zu einem Ausschleuspunkt zwischen Tageslager 26 und innerem Beschickungskreis 31 oder direkt zu einem Rollenwechsler 06
- Einlagern einer Papierrolle ins Tageslager 26
- Umlagerungen im Tageslager 26
- Überwachung der Haltbarkeit der Klebevorbereitung 29 im Tageslager 26
- Ausschleusen einer Rolle zur erneuten Klebevorbereitung 29
- Anliefern einer Papierrolle zu einem Übergabepunkt eines Rollenwechslers 06
- Anliefern eines Ladehilfsmittels bzw. Adapters zu einem Rollenwechsler 06 zur Aufnahme einer Restrolle
- Rücknahme von Papierrollen vom Rollenwechsler 06 (mit oder ohne Adapter)
- Transport eines Resthülsenbehälters von und zu den Rollenwechslern 06
- Berechnung und Überwachen des Papierbedarfs für die Produktion mit Hilfe der Produktionsdaten von der Maschinenleitebene 11
- Verwaltung der Lagerbelegung und Lagerbestände im Tageslager 26 und im Hautlager 21
- Statistische Auswertungen und Inventur
- Prozeßvisualisierung
- Wareneingangsavise in elektronischer Form (elektronischer Lieferschein)
- Verwaltung eines ggf. vorhandenen Kaminlagers/zusätzlichen Blocklagers
- Defaultbefüllung des Tageslagers 26 auf Grund von Erfahrungswerten/Vorgaben
- Automatische Barcodeerfassung
- Ausdrucken von Bestandslisten/Protokollen
- Graphisches Benutzer-Interface mit intuitiver Benutzerführung
- Standardfunktionen einer modernen Lagerverwaltung

Die bislang aus prozeßtechnischer und datentechnischer Sichtweise ausgeführte Konzeption der Druckerei mit Materialflußsystem 05 kann physikalisch prinzipiell auf unterschiedliche Art und Weise physikalisch realisiert sein. Im Mittelpunkt der folgenden Ausführung steht die An- bzw. Einbindung des Materialflußsystems 05 an bzw. in das Netzwerk 09 der Druckmaschine 01 und der Produktplanungssystem 03 sowie der Datenfluß und die Anbindung des Rollenwechslers 06 und/oder des inneren Beschickungskreises 31. Die Verbindung 15 zu den übrigen Subsystemen 18; 19; 21; 22; 23; 24; 26; 27 (soweit vorgesehen) ist lediglich durch eine Anzahl Doppelpfeile dargestellt. Im folgenden werden Ausführungsbeispiele für eine vorteilhafte Anbindung erläutert, auf welche jedoch die vorgenannten Konzeptionen nicht beschränkt sind.

Grundsätzlich kann bei der Anbindung des Materialflußsystems 05 an die Druckmaschine 01 zwischen nach zweierlei Gesichtspunkten unterschieden werden. Zum einen kann unterschieden werden, ob der Datenaustausch zwischen Druckmaschine 01 und Materialflußsystem 05 neben der Verbindung zur Leitstandsebene 11 über eine gesonderte Verbindung zum Rollenwechslers 06 (bzw. des inneren Beschickungskreises) erfolgt, oder ob die Kommunikation zwischen Rollenwechsler 06 (bzw. des inneren Beschickungskreises 31) und Materialflußsystem 05 über das druckmaschineninterne Netzwerk 09 und die Leitstandsebene erfolgt. Zum zweiten kann unterschieden werden, ob zwischen der Steuerung 35 des Rollenwechslers 06 (bzw. des inneren Beschickungskreises), dem Materialflußsystem 05 und der Leitstandsebene 11 ein homogenes Netzwerk ausgebildet ist, d. h. eine auf das selbe Protokoll basierende durchgängige Verbindung besteht, oder nicht.

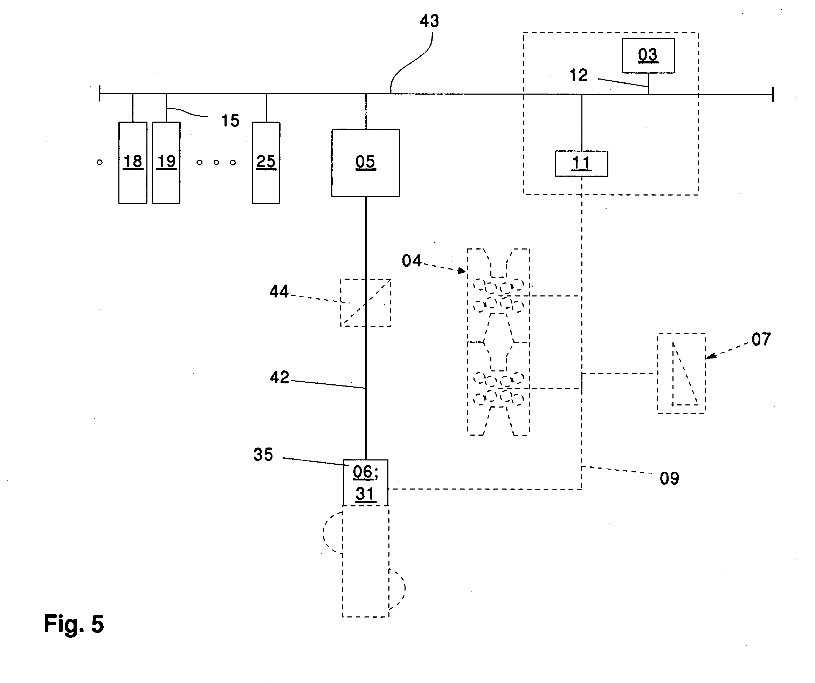

In Fig. 5 ist schematisch die physikalische Anbindung des Materialflußsystems 05 an die Druckmaschine 01 und das Produktplanungssystem 03 dargestellt. Von den Aggregaten der Druckmaschine 01 ist symbolisch lediglich ein einziger Druckturm 04, ein einziger Falzapparat 07 sowie ein einzelner Rollenwechsel 06 strichliert dargestellt. Diese Aggregate 04; 07; 06 stehen druckmaschinenintern miteinander und mit der Leitebene 11 über ein zunächst beliebig geartetes Netzwerk 09 (homogen oder heterogen) in Signalverbindung 09 (lediglich symbolisch durch strichlierte Linien angedeutet).

Im ersten Ausführungsbeispiel gemäß Fig. 5 steht das Materialflußsystem 05 einerseits über eine von der druckmaschineninternen Signalverbindung 09 verschiedene Signalverbindung 42 mit der Steuerung 35 des inneren Beschickungskreises 31 und/oder des Rollenwechslers 06 in Verbindung. Diese Steuerung 35 kann auch zwei getrennte Steuerkreise aufweisen und/oder zweiteilig ausgeführt sein, wobei dann eine Verbindung zwischen den Teilen besteht und/oder beide Teile mit der Signalverbindung 42 verbunden sind. Daneben steht das Materialflußsystem 05 über eine Signalverbindung 43 mit der Leitebene 11 und dem Produktplanungssystem 03 in Verbindung. Die Funktionalitäten der Leitebene 11 und des Produktplanungssystems 03 können auch baulich und ggf. sofwaremäßig als eine Einheit ausgeführt sein (strichliert angedeutet). Zum dritten steht das Materialflußsystem 05 mit den weiteren Subsystemen (soweit vorhanden und integriert) des Rollenversorgungssystems 02 in Signalverbindung 15. Diese Ausprägung der Architektur zeichnet sich dadurch aus, dass die erforderliche Kommunikation zwischen Materialflußsystem 05 und Rollenwechsler 06 bzw. innerem Beschickungskreis 31 nicht über das druckmaschineninterne Netzwerk 09 "durchgeschleift" wird. Über das Netzwerk 09 erhält und versendet der Rollenwechsler 06 bzw. der innerem Beschickungskreis 31 die Produktion und das Drucken betreffende Daten während über die Signalverbindung 42 die Kommunikation bezüglich der Rollenversorgung erfolgt. Die Ausbildung der Verbindung 42 zwischen Rollenwechsler 06 bzw. innerem Beschickungskreis 31 und Materialflußsystem 05 ist unabhängig von der Ausbildung der Schnittstelle bzw. der Verbindung 43 zur Leitebene 11 und/oder zum Produktplanungssystem 03.

Die Anbindung des Materialflußsystems 05 an die Subsysteme, an die Leitebene 11 und an die Produktionsplanung 03 kann prinzipiell jeweils über einzelne Schnittstellen und Verbindungen erfolgen. In vorteilhafter Ausführung erfolgt die Verbindung jedoch über ein gemeinsames Netzwerk 43, an welches das Materialflußsystems 05, die Subsysteme, die Leitebene 11 und die Produktionsplanung 03 als sog. Clients angebunden sind. Das Netzwerk 43 ist vorteilhaft in der Weise ausgeführt, dass es mit den Schnittstellen möglichst vieler Subsysteme, im Idealfall aller, den selben Typ darstellt. Auch die Schnittstellen der Leitebene 11 und des Produktionssystems 03 sind diesen Typs. Als Zugriffsverfahren wird in vorteilhafter Ausführung ein stochastisches Zugriffsverfahren, insbesondere das nach IEEE 802.3 standardisierte CSMA/CD Zugriffsverfahren verwendet. Das Netzwerk 43 ist hier bevorzugt als Ethernet, insbesondere mit einer Bandbreite von 100 Mbit/s oder mehr, ausgebildet. Die Kommunikation kann prinzipiell auf unterschiedlichsten Protokollen, jedoch in einer vorteilhaften Ausgestaltung auf dem TCP/IP-Protokoll oder eine Socket-Verbindung basiert sein.

Die genannte Ausführung des Netzwerks 43 birgt zum einen Vorteile im Hinblick auf die Geschwindigkeit der Datenvermittlung. Zum anderen erlaubt es alle oder zumindest die meisten Subsysteme des Rollenversorgungssystems 02 ohne das Erfordernis einer Umsetzung des Protokolls (z. B. über ein die Geschwindigkeit verminderndes Gateway) zu verbinden, da in vorteilhafter Ausführung die Subsysteme (abgesehen von Rollenwechsler 06 bzw. innerem Beschickungskreis 31) eine entsprechend ausgeführte Schnittstelle, insbesondere Ethernet-Schnittstelle, aufweisen. Auch für Rollenwechsler 06 und/oder innerem Beschickungskreis 31 kann dies vorgesehen sein. Zum dritten erlaubt es eine derartige Ausbildung des Netzwerks 43 bei Bedarf Datenbank- und/oder Dateizugriffe hierüber zu starten, ohne dass zusätzlich ein Datenbankclient implementiert werden muß.

Generell können das Netzwerke 43 und das druckmaschineninterne Netzwerk 09 in einer vorteilhaften Ausführung als Netzwerke 09; 43 gleichen Typs als gemeinsames, homogenes Netzwerk 09, 43 (mit oder ohne die Ausbildung von Segmenten) mit einer gemeinsamen Protokollfamilie ausgeführt sein. Dieses Netzwerk 09; 43 kann insbesondere als Ethernet, zumindest als Fast-Ethernet (oder 100 Mbit Ethernet) mit mindestens 100 Mbit/s, insbesondere zur Gewährleistung einer niedrigen Kollisionsrate im Bereich der Druckmaschine 01 jedoch als Gigabit-Ethernet mit 1.000 Mbit/s und mehr, ausgeführt sein.

In einer anderen vorteilhaften Ausführung sind das Netzwerk 43 und das Netzwerk 09 je nach ihren spezifischen Anforderungen verschieden ausgeführt. Das druckmaschineninterne Netzwerk 09 kann ggf. zusätzlich noch selbst heterogen aufgebaut sein, auf verschiedene Protokollfamilien zurückgreifen und ein oder mehrere Protokollumsetzer bzw. Gatways aufweisen. Im vorliegenden Beispiel sind zumindest Bereiche des Netzwerks 09, einschließlich der Anbindung von Rollenwechsler 06 und innerem Beschickungskreis 31, als Netzwerk 09 mit deterministischem Zugriffsverfahren, insbesondere auf Token-Passing basierend, z. B. als Arcnet ausgeführt. Dies gewährleistet innerhalb der Druckmaschine 01 die sichere Übermittlung zeitkritischer Daten innerhalb von sicheren Zeitfenstern unter weitgehendem Ausschluß von Daten-Kollisionen.

Da nun zwischen dem Netzwerk 43 und der Steuerung 35 des Rollenwechslers 06 bzw. inneren Beschickungskreises 31 eine Multiprotokollumgebung vorliegt, weist die Verbindung vom Rollenwechslers 06 bzw. inneren Beschickungskreises 31 zum Materialflußsystem 05 einen Protokollumsetzer 44 bzw. ein Gatway 44 (strichliert) auf.

Durch die genannte Architektur ist ein schnelles Kommunizieren des Materialflußsystem 05 mit der Leitstandsebene 11/dem Produktplanungssystem 03 und den verschiedenen Subsystemen mit geringem Aufwand möglich.

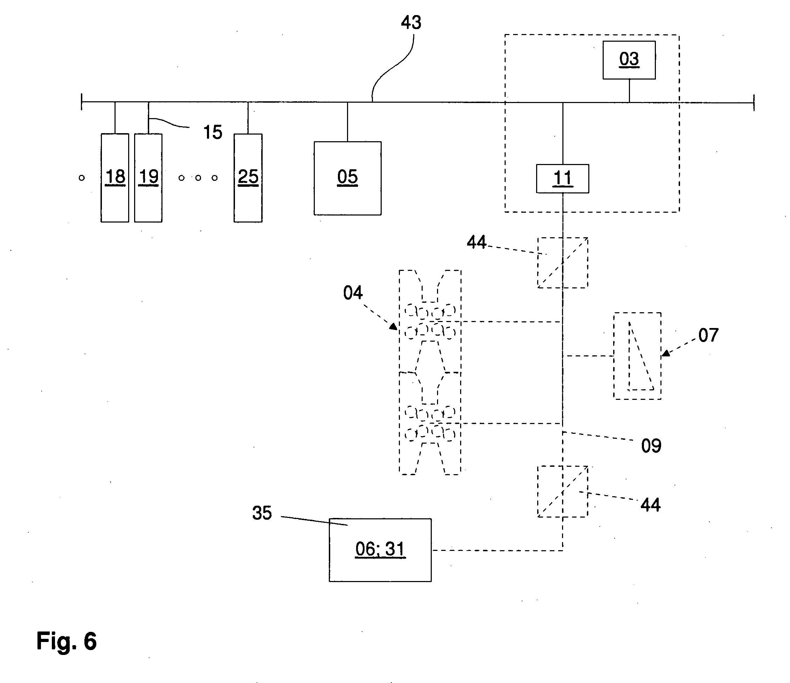

In einem zweiten Ausführungsbeispiel (Fig. 6) erfolgt die Anbindung des Materialflußsystems 05 an den Rollenwechsler 06 bzw. den inneren Beschickungskreis 31 nicht über eine eigene Verbindung 42, sondern über die Signalverbindung 43 zur Leitebene 11 und über das druckmaschineninterne Netzwerk 09. Unter Verwendung eines vom Netzwerk 09 verschiedenen Netzwerks 43 ist hierzu wieder die Zwischenschaltung eines Protokollumsetzers 44 bzw. Gatways 44 (strichliert) erforderlich. Die das Rollen-Handling bzw. die Rollenversorgung betreffenden Daten werden hierbei durch das vorhandene druckmaschineninterne Netzwerk 09 geführt. Von Vorteil ist es bei dieser Ausführung, dass vorhandene Pfade genutzt werden können. Ein durch höhere Netzwerkbelastung verursachte Verlangsamung und/oder ein höheres Kollisionsrisiko ist hierbei jedoch in Kauf zu nehmen, kann aber durch die Ausbildung des druckmaschineninternen Netzwerks 09 als schnelles, breitbandiges Bussystem mit Token-Passing oder als schnelles Ethernet, z. B. als Gigabit-Ethernet, vermindert werden.

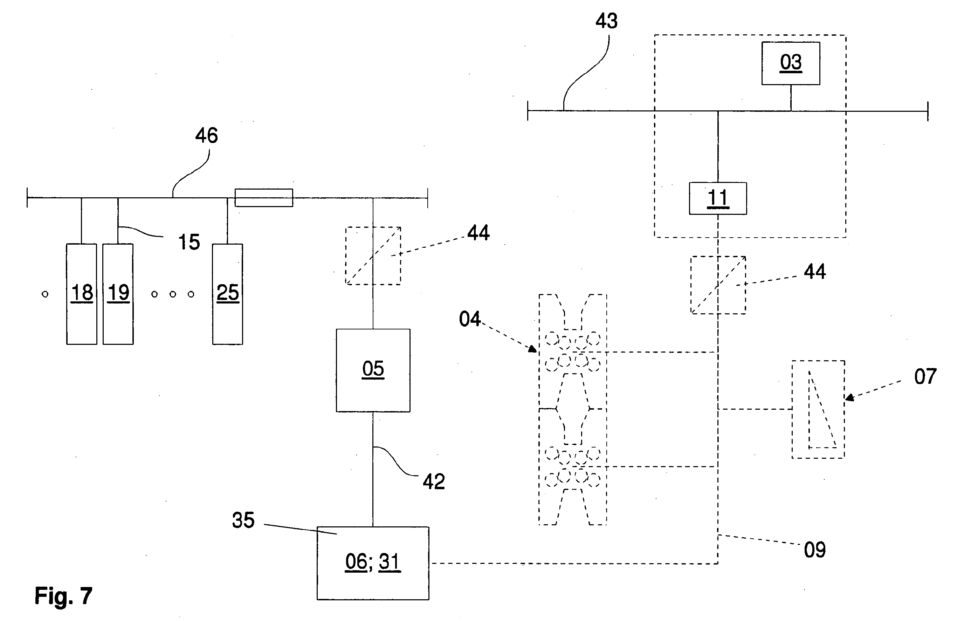

In einer Abwandlung des zweiten Ausführungsbeispiels erfolgt in Fig. 7 die Anbindung des Materialflußsystems 05 nicht direkt über das Netzwerk 43 zur Leitebene 11, sondern über das druckmaschineninterne Netzwerk 09. Der Datenaustausch sowohl mit dem Rollenwechsler 06 bzw. dem inneren Beschickungskreis 31 und der Leitebene 11 bzw. dem Produktplanungssystem 03 erfolgt hier über die Verbindung 42. Liegt im Bereich der Verbindung 42 zum Materialflußsystem 05 oder zwischen Materialflußsystem 05 und den nachgeordneten Subsystemen ein für die Verarbeitung im Materialflußsystem 05 oder die Übergabe an die Subsysteme ungeeignetes Protokoll vor, so ist eine Anordnung eines Protokollumsetzers 44 bzw. Gatways 44 zwischen Rollenwechsler 06 und Materialflußsystem 05 (nicht dargestellt) oder zwischen Materialflußsystem 05 und den nachgeordneten Subsystemen (strichliert) von Vorteil. Die Verbindung zwischen Materialflußsystem 05 und den Subsystemen kann über jeweilige einzelne Schnittstellen oder eine als Netzwerk 46 ausgeführte Verbindung 46 erfolgen.

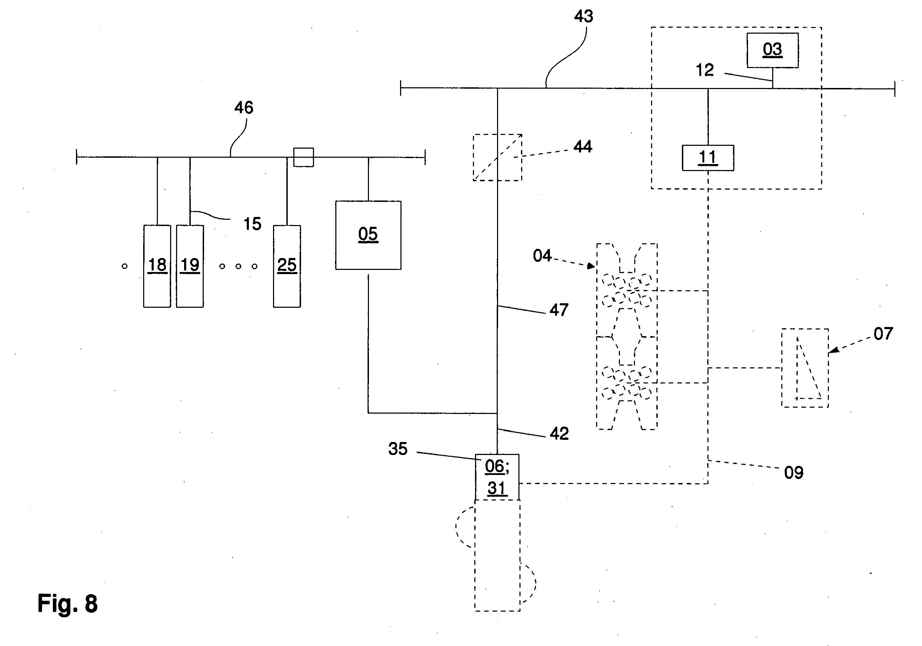

In einer Abwandlung weiteren Abwandlung erfolgt in Fig. 8 die Anbindung des Materialflußsystems 05 zur Leitebene 11 nicht über das druckmaschineninterne Netzwerk 09, sonder wie über eine vom druckmaschineninternen Netzwerk 09 verschiedene Verbindung 47 zum Netzwerk 43. Bei Multiprotokollumgebung zwischen Netzwerk 09 und Netzwerk 43 ist die Anordnung eines Protokollumsetzers 44 bzw. Gatways 44 zwischen Netzwerk 43 und dem Materialflußsystem 05 vorgesehen. Der Datenaustausch mit dem Rollenwechsler 06 bzw. dem inneren Beschickungskreis 31 erfolgt über die Verbindung 42. Liegt im Bereich der Verbindung 42 zwischen Materialflußsystem 05 und den nachgeordneten Subsystemen ein für die Verarbeitung im Materialflußsystem 05 oder die Übergabe an die Subsysteme ungeeignetes Protokoll vor, so ist eine Anordnung eines Protokollumsetzers 44 bzw. Gatways 44 zwischen Materialflußsystem 05 und den nachgeordneten Subsystemen (nicht dargestellt) von Vorteil. Die Verbindung zwischen Materialflußsystem 05 und den Subsystemen kann über jeweilige einzelne Schnittstellen oder ein Netzwerk 46 erfolgen.

Die zu Fig. 5 gemachten Ausführungen zu vorteilhaften Ausgestaltungen der Netzwerke 09; 43 ist auf die Ausführungen zu Fig. 6 bis 8 sinngemäß entsprechend anzuwenden.

### Bezugszeichenliste

- 01: Maschine, Druckmaschine
- 02: Materialversorgungssystem, Rollenversorgungssystem
- 03: Produktplanungssystem
- 04: Druckeinheit, Druckturm, Aggregat
- 05: Steuersystem, Materialflußsystem
- 06: Rollenwechsler, Aggregat
- 07: Aggregat, Falzapparat
- 08: Bedien- und Recheneinheit
- 09: Signalleitung, Netzwerk, druckmaschinenintern
- 10: -
- 11: Leitebene, Maschinenleitebene
- 12: Signalverbindung
- 13: Rechen- und/oder Datenverarbeitungseinheit, Server
- 14: -
- 15: Signalverbindung
- 16: Signalverbindung
- 17: Rechen- und/oder Datenverarbeitungseinheit
- 18: Subsystem, Wareneingang
- 19: Subsystem, Transportsystem
- 20: Signalverbindung
- 21: Subsystem, Lager, Hauptlager, Hochregallager
- 22: Subsystem, Transportsystem, Regalbediengerät
- 23: Subsystem, Vorbereitungskreis
- 24: Subsystem, Transportsystem
- 25: -
- 26: Subsystem, Lager, Tageslager, Produktionslager
- 27: Subsystem, Transportsystem
- 28: Subsystem, Auspackstation (23)
- 29: Subsystem, Klebevorbereitung (23)
- 30: Kippstation
- 31: Transportsystem, innerer Beschickungskreis
- 32: Transportweg
- 33: Transportweg
- 34: Steuerung, Recheneinheit, Fahrzeugleitrechner
- 35: Steuerung, Recheneinheit, Fahrzeugleitrechner
- 36: -
- 37: -
- 38: Prozeßebene, Planungsebene
- 39: Prozeßebene, Koordinationsebene
- 40: -
- 41: Prozeßebene, Ausführungsebene
- 42: Signalverbindung, Verbindung
- 43: Signalverbindung, Verbindung, Netzwerk
- 44: Protokollumsetzer, Gatway
- 45: -
- 46: Verbindung
- 47: Verbindung, Netzwerk

- A: Sektion
- B: Sektion

## Patentansprüche

1. Steuersystem (05) zur Steuerung des Materialflusses in einem Rollenversorgungssystem (02) einer bahnver- und/oder -bearbeitenden Maschine (01) mit mindestens zwei ihm untergeordneten Subsystemen, nämlich wenigstens einem Lager (21; 26) und wenigstens einem Transportsystem (31) zwischen dem Lager (21; 26) und der Maschine (01), **dadurch gekennzeichnet, dass** das Steuersystem (05) eine Planungsebene (38) und eine Koordinationsebene (39) aufweist, wobei in der Planungsebene (38) unter Verwendung von produktionsrelevanten Plandaten für anstehende Produktionen aus einem Produktplanungssystem (03) eine Versorgungsstrategie entwickelt und in der Koordinationsebene (39) eine Ablaufsteuerung der mindestens zwei Subsysteme vorgenommen wird, um die Versorgung der Produktion unter den durch die Planungsebene (38) vorgegebenen Rahmenbedingungen sicher zu stellen.

2. Steuersystem (05) nach Anspruch 1, **dadurch gekennzeichnet, dass** das mindestens eine Subsystem lediglich aus der Koordinationsebene (39) Aufträge zum Transport erhält.

3. Steuersystem (05) nach Anspruch 1, **dadurch gekennzeichnet, dass** die Planungsebene (38) für die Verbrauchsberechnung, Einlager- und Versorgungsstrategie, bezogen auf die geplanten Produktionen, für die Funktionsüberwachung und die Lager- und Bestandsverwaltung zuständig ist.

4. Steuersystem (05) nach Anspruch 3, **dadurch gekennzeichnet, dass** die Planungsebene (38) eine Schnittstellen zur Koordinationsebene (39) aufweist.

5. Steuersystem (05) nach Anspruch 4, **dadurch gekennzeichnet, dass** die Planungsebene (38) eine Schnittstellen zu systemfremden Datenquellen aufweist.

6. Steuersystem (05) nach Anspruch 5, **dadurch gekennzeichnet, dass** die Planungsebene (38) eine Schnittstellen zu systemfremden Datenquellen zum Erhalt elektronischer Lieferdaten bzw. Lieferscheinen von Lieferanten und zu Datensenken zur Abgabe von Verbrauchsdaten an eine Datenbank aufweist.

7. Steuersystem (05) nach Anspruch 3, **dadurch gekennzeichnet, dass** in der Planungsebene (38) Daten zum Rollenbestand vorliegen, und dort bei gegebenem Anlaß entschieden wird, ob und welche Ersatzrolle anstelle einer fehlenden geforderten Rolle eingesetzt werden soll.

8. Steuersystem (05) nach Anspruch 1, **dadurch gekennzeichnet, dass** die Koordinationsebene (39) für die Ablaufsteuerung, die Transportsteuerung, die Bewegungssteuerung, die Sicherheitsüberwachung und die Lagerplatzverwaltung verantwortlich ist.

9. Steuersystem (05) nach Anspruch 1, **dadurch gekennzeichnet, dass** die Koordinationsebene (39) von der Planungsebene (38) erhält, wo und in welchem Zeitfenster welches Papier oder welche Rolle benötigt wird und koordiniert die unterlagerten Subsysteme einer Ausführungsebene (41), um die Versorgung der Produktion unter den genannten Rahmenbedingungen sicher zu stellen.

## Claims

1. Control system (05) for controlling the material flow in a reel supply system (02) of a web-processing and/or web-handling machine (01) comprising at least two subsystems subordinate to it, namely at least one store (21; 26) and at least one transport system (31) between the store (21; 26) and the machine (01), **characterized in that** the control system (05) has a planning level (38) and a coordination level (39), a supply strategy being developed in the planning level (38) with the use of production-relevant plan data for imminent productions from a product planning system (03) and a sequence control of the at least two subsystems being performed in the coordination level (39) in order to ensure the supply of production under the general conditions specified by the planning level (38).

2. Control system (05) according to Claim 1, **characterized in that** the at least one subsystem receives transport orders only from the coordination level (39).

3. Control system (05) according to Claim 1, **characterized in that** the planning level (38) is responsible for consumption calculation, storage and supply strategy, based on the planned productions, for function monitoring and store and inventory management.

4. Control system (05) according to Claim 3, **characterized in that** the planning level (38) has an interface with the coordination level (39).

5. Control system (05) according to Claim 4, **characterized in that** the planning level (38) has an interface with data sources outside the system.

6. Control system (05) according to Claim 5, **characterized in that** the planning level (38) has an interface with data sources outside the system for receiving electronic delivery data or delivery notes from suppliers and with data sinks for transferring consumption data to a database.

7. Control system (05) according to Claim 3, **characterized in that** data relating to the reel stock are present in the planning level (38) and, when prompted, a decision is made there as to whether a spare reel, and which spare reel, is to be used instead of a requested reel which is missing.

8. Control system (05) according to Claim 1, **characterized in that** the coordination level (39) is responsible for sequence control, transport control, movement control, safety monitoring and storage place management.

9. Control system (05) according to Claim 1, **characterized in that** the coordination level (39) receives from the planning level (38) information regarding where and in which time window which paper or which reel is required and coordinates the subordinate subsystems of an execution level (41) in order to ensure the supply of production under said general conditions.

## Revendications

1. Système de commande (05), pour la commande du flux matière dans un système d'alimentation en bobines (02) d'une machine (01) transformant et/ou usinant des bandes, avec au moins deux sous-systèmes lui étant hiérarchiquement inférieur, précisément au moins un magasin (21 ; 26) et au moins un système de transport (31) entre le magasin (21 ; 26) et la machine (1), **caractérisé en ce que** le sous-système (05) présente un plan de planification (38) et un plan de coordination (39), où, à partir d'un système de planification de produit (03), une stratégie d'alimentation est développée dans le plan de planification (38), en utilisant des données de plan présentant une importance pour la production, pour des productions à venir, et une commande de déroulement des au moins deux sous-systèmes est effectuée dans le plan de coordination (39), pour assurer l'alimentation de la production dans les conditions limites prédéterminées par le plan de planification (38).

2. Système de commande (05) selon la revendication 1, **caractérisé en ce que** le au moins un sous-système reçoit des ordres de transport uniquement de la part du plan de coordination (39).

3. Système de commande (05) selon la revendication 1, **caractérisé en ce que** le plan de planification (38) est compétent pour le calcul de consommation, la stratégie de mise en magasin et d'alimentation, en se référant aux productions planifiées, pour la surveillance fonctionnelle et la gestion des stocks et du réapprovisionnement.

4. Système de commande (05) selon la revendication 3, **caractérisé en ce que** le plan de planification (38) présente une interface vis-à-vis du plan de coordination (39).

5. Système de commande (05) selon la revendication 4, **caractérisé en ce que** le plan de planification (38) présente une interface vis-à-vis de sources de données étrangères au système.

6. Système de commande (05) selon la revendication 5, **caractérisé en ce que** le plan de planification (38) présente une interface vis-à-vis de sources de données étrangères au système, pour recevoir des données de livraisons ou des bons de livraisons électroniques de la part de fournisseurs et vis-à-vis de puits de données, pour délivrer des données de consommation à une bande de données.

7. Système de commande (05) selon la revendication 3, **caractérisé en ce que** des données concernant l'état du stock de bobines sont présentes dans le plan de planification (38) et, pour une occasion donnée, il est décidé si et quelle bobine de rechange doit être utilisée au lieu d'une bobine transportée manquante.

8. Système de commande (05) selon la revendication 1, **caractérisé en ce que** le plan de coordination (39) est responsable en matière de commande de déroulement, de commande de transport, de commande de déplacement, de surveillance de la sécurité et de gestion des emplacements de stockage.

9. Système de commande (05) selon la revendication 1, **caractérisé en ce que** le plan de coordination (39) reçoit du plan de planification (38) l'indication de l'emplacement et de la fenêtre de temps pour lesquels un certain papier ou une certaine bobine est nécessaire, et coordonne les sous-systèmes hiérarchiquement inférieurs d'un plan d'exécution (41), pour assurer l'alimentation de la production dans les conditions limites citées.
